# EUROPEAN PATENT SPECIFICATION

(11) **EP 1 746 352 B1**
(45) Date of publication and mention of the grant of the patent: **30.03.2011**
(21) Application number: 06253789.9
(22) Date of filing: 19.07.2006
(51) Int. Cl.: F24D 11/00, F24D 3/08, F24H 9/20, F24H 9/18

(54) **Heating system**
Heizungsanlage
Système de chauffage

(30) Priority: 19.07.2005 GB 0514800
(43) Date of publication of application: 24.01.2007
(73) Proprietor: Bexhall Limited, Framlingham Woodbridge Suffolk IP13 9AZ (GB)
(72) Inventor: Buckles, David, c/o RBR Associates Ltd, Rendlesham, Woodbridge, Suffolk IP12 2TW (GB); Holmes, Mark, Oakham, Rutland LE 15 6PD (GB)
(74) Representative: Exell, Jonathan Mark

(56) References cited:
- GB-A- 2 181 218
- US-A- 4 588 875

## Description

The present invention relates to a heating system in which a hot water cylinder is used to provide hot water and heating according to the preamble of claim 1. Such a heating system is known from GB-A-2 181 218.

### Background to the Invention

In a conventional indirect heating system hot water from a boiler (typically gas or oil fired, but sometimes electrical) is pumped through a heat exchanger coil which itself is housed within the hot water cylinder. Heat exchange with cold water entering the cylinder from the bottom occurs and in this way the cold water is heated to be used to supply hot water taps, showers, washing machines etc.

Typically, a separate supply of hot water from the same boiler is passed directly through the radiators for central heating of a building.

A relatively low powered electrical immersion heater is often installed within the cylinder that can be controlled separately to the boiler. Immersion heaters are often used to augment hot water heating from the boiler; to provide a heating boost when hot water is needed and there is not the time to wait for the boiler to heat the water; or when it is not desired to use the boiler.

Document US-A-4 588 875 reveals a heating system where individual heating elements are turned on and off in a random sequence in order to ensure equal operating periods.

With this typical set-up, a boiler is always required. Whilst there are a variety of options, environment driven regulations demand even more efficient boilers. In the UK it is now a requirement to fit a condensing boiler (typically 10-15% more efficient than a conventional type) where this is practical and reasonably economically viable. A condensing boiler recovers waste energy from flue gases and uses this to supplement heat from the burners. However, in addition to being more expensive than a conventional boiler, a condensing boiler also requires the installation of a condensate drain. Whilst the provision of this drain can be simple in some cases, in others, for example in existing dwellings where the boiler is to be sited remotely from a wastewater drain, it is less practical. In addition, the condensate produced from the combustion process contains acids. Whilst the materials of the condensing boiler are specified to resist attack from this acid (incidentally one of the reasons for the increased cost of a condensing boiler) damage to water drains/sewers and the wider environment is to be expected. The plumbing from the flues could also cause environmental and nuisance issues.

Modern boilers are relatively simple pieces of equipment but demand on them is often high and relatively short service lives can be expected. Maintenance costs can be high and insurance companies and service providers exploit fully the publics (often irrational) fears of breakdown.

Space is required to install a boiler and this becomes significant in smaller dwellings such as flats.

Although modern boilers may be up to 90% efficient, significant losses occur in conveying and exchanging this energy with cold water in the cylinder, especially when the boiler is sited some way from the cylinder. Furthermore, heating a tank of water from cold can take a significant length of time.

A conventional combined hot water and central heating system is relatively costly to install. A gas/oil and electric supply must be installed to the boiler, which for reasons of general practicality may be necessarily some way distance from the hot water cylinder. Depending on the installation, a flue to an external wall or roof may be required. Pipe-work of substantial diameter (typically around 28mm) must be installed for water feed and return between the boiler and hot water cylinder. In a vented system, a topping up system must be installed at a level higher than the highest radiator (typically in the loft space) and this requires additional labour expense.

### Statement of Invention

According to an aspect of the present invention, there is provided a heating system according to claim 1.

In the present invention, a heating system includes a water storage tank, a heat exchanger and a plurality of electrical heating elements, the heat exchanger and electrical heating elements being mounted substantially within the water storage tank, the electrical heating elements being controllable to heat water within the water storage tank and the heat exchanger being arranged to be coupled to a central heating circuit for transferring heat from the water in the storage tank to heat the central heating circuit The electrical heating elements are arranged into a plurality of circuits, each circuit being independently powered and controllable.

The heating system may further comprise a secondary heat source arranged to provide auxiliary heat to the water within the water storage tank. The secondary heat source may include at least one of:
a photovoltaic panel; a solar heat exchanger; a waste heat recovery system; or a geothermal heating system.

The heating system may further comprise a master controller arranged to communicate with the respective controllers of each circuit and to control operation of the heating elements in dependence on a predetermined heating program. The master controller may be arranged to detect failure of a circuit and to adjust operation of other operational circuits to compensate. The master controller may be arranged to supplement heating by the secondary heat source with heat from the heating elements in dependence on the predetermined heating program.

A heat transfer medium may be pumped through the heat exchanger to obtain heat for the central heating circuit.

The heating system may further comprise a pressurised water supply system arranged to supply water to the water storage tank substantially at a predetermined pressure.

The present invention seeks to provide an improved system of central heating and hot water supply, which removes the need for a conventional boiler, gas supply and the ventilation required for fuel combustion.

Water is heated directly in the hot water tank so that all heat produced is imparted to the water which should result in a much more efficient system than where a boiler is used (which itself will impart some heat produced into its surrounding environment).

The system could be used in any environment but is particularly applicable to self-contained flats and other small dwellings, offices and granny annexes where access for gas supplies, ventilation and the like is not possible.

An immersion heating system is installed, preferably in the lower portion of the tank and will be in direct contact with the water contained within the tank. A heat exchanger, preferably a copper coil is positioned within the tank to communicate directly with a central heating circuit. Water within the tank and without the coil is heated under the action of the immersion heater and supplied to the dwellings hot water and central heating connections as required.

Heating systems according to the present invention could be retrofitted to existing installations.

Another heat transfer medium, such as air, could be within the heat transfer coil and could feed central heating elements other than 'wet' radiators.

Particular benefits include:
- No boiler required. Reduced purchase and installation costs
- No gas or oil
- Landlords certificate not required yearly
- Greener in as much as less impact to the environment than gas or oil - no flue emissions.
- Suitable for renewable energy e.g. wind, wave, solar, heat pumps
- Corgi registered installer not required
- Use of low tariff electricity possible
- More controllable and responsive than conventional electric boiler based systems
- Single unit and less complex than boilers resulting in lower maintenance costs to the consumer.

### Brief Description of the Drawings

Examples of the present invention will now be described in detail, with reference to the accompanying drawings, in which:
Figure 1 is a schematic diagram of a heating system according to an embodiment of the present invention;
Figure 2 is a schematic diagram of a heating system according to an alternate embodiment of the present invention;
Figure 3 is a schematic diagram of an electrical heater suitable for use in a preferred embodiment of the present invention; and,
Figure 4 is a schematic diagram of a heating system according to another embodiment of the present invention.

### Detailed Description

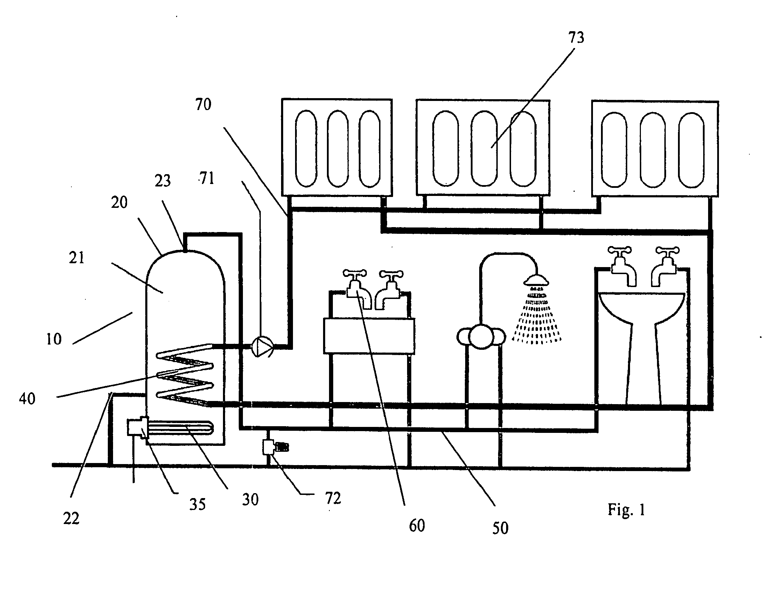

Figure 1 is a schematic diagram of a heating system according to an embodiment of the present invention.

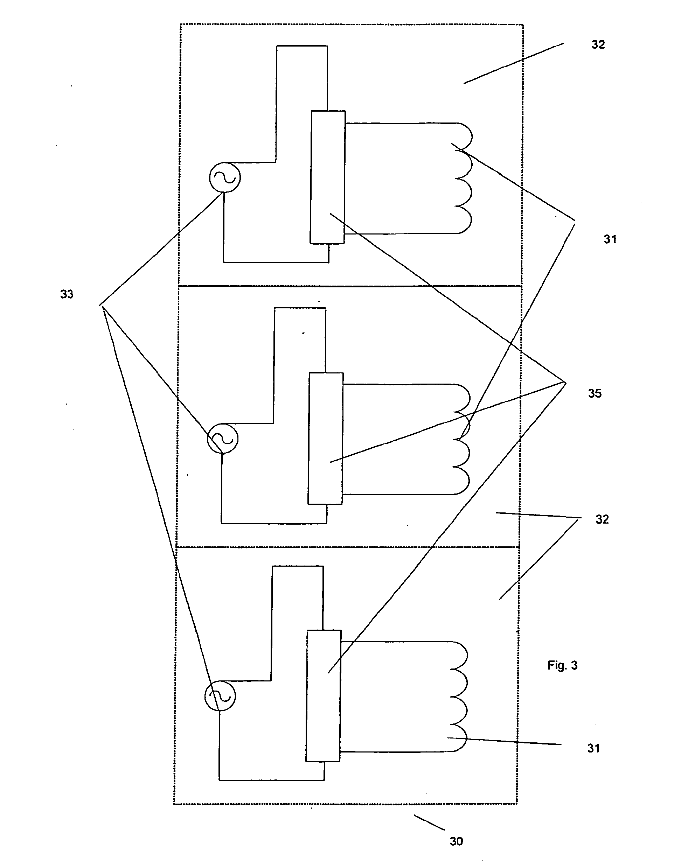

The heating system 10 includes a hot water tank 20. An electrical heater 30 and a heat exchanger 40 are mounted within the hot water tank 20. The electrical heater comprises a plurality of independently powered and controllable heating elements and is discussed in greater detail with reference to Figure 3.

The electrical heater 30 is controlled by a controller 35 to heat water 21 within the hot water tank 20. The hot water tank 20 includes a cold water supply inlet 22 for receiving cold water from a supply to replace water used and a hot water supply outlet 23 for providing hot water to hot water plumbing 50, appliances 60 and the like.

The heat exchanger 40 is positioned within the hot water tank 20 in contact with the heated water 21 stored in the hot water tank 20. The heat exchanger 40 is coupled to a central heating circuit 70. Water within the central heating circuit 70 can be selectively pumped via one or more pumps 71 through the heat exchanger 40. Heat from the water 21 within the hot water tank 20 is transferred to water within the central heating circuit 70 as it passes through the heat exchanger 40 enabling radiators 73 and the like that are part of the central heating circuit to be heated. It will be appreciated that the heat exchanger may also be coupled to other heating elements such as under floor heating.

Hot water is drawn from the cylinder 20 and mixed with cold water at a thermostatic valve 72 enabling safer lower temperatures at hot water outlets 60.

The pump 71 is preferably controlled by a thermostat and programmable timer with override so that heat is available on demand subject to hot water being present in the tank 20.

Alternative heat transfer media, such as air, could be used within the heat exchanger 40 instead of water depending on the particular central heating circuit to be heated.

Preferably, the heat exchanger 40 is a copper coil, although any other suitable material may be used.

Preferably, the hot water tank 20 is insulated enabling heated water to be stored in the tank for provision on demand via outlet 23.

Preferably, the hot water tank 20 is insulated to prevent heat loss and enable heated water to be stored for supply on demand. Preferably, the hot water tank is an un-vented hot water cylinder such as existing pressurised systems. It will be appreciated that the present invention is also applicable for use with conventional vented systems. The hot water tank 20 could be copper, stainless steel, glass lined, or materials such as plastics.

In a preferred embodiment of the present invention, the electrical heater 30 is formed from 3 circuits of heating elements, each element having a rating resulting in a maximum power rating of between 3 and 9KW (the higher end being intended for providing heat to whole buildings, blocks of flats etc). However, other types of heater and power ratings could be substituted.

The power rating of the heater 30 (which will typically be much more powerful than conventional electrical immersion heaters) is selected in dependence on the physical size of the heater element or elements (i.e fitting it through the hole or holes in the cylinder), and heat dissipation properties of the heater 30 (to reduce the possibility of overheating). Preferably, the heating element is made from titanium (or a material of similar properties) as it is more capable of sustaining the heat transfer required than would be a standard material such as stainless steel. A larger wattage heater system could be installed (and might be advantageous in terms of cylinder size and speed of heating) subject the requisite supply and overload protection systems.

As the electrical capacity of electrical elements increases it becomes more difficult to dissipate the input energy to the surround water [the water temperature immediately surrounding the element will be far hotter than 100°C]. In one embodiment, heating elements having an increased surface area may be used. For example, the elements may via include dimples or other surface features or fins attached to the outside of the elements.

Optionally, a ship in a bottle type arrangement may be used to erect the fins or extended surface area once inside the cylinder. In this manner a heating element may have two configurations, a first configuration having dimensions for installation via an appropriate aperture in the cylinder and a second configuration having an enlarged surface area. The element is installed in the first configuration and the shifted to the second configuration once in the cylinder. By increasing the surface area of the elements, there is more area for the input energy to be dissipated without overheating the element.

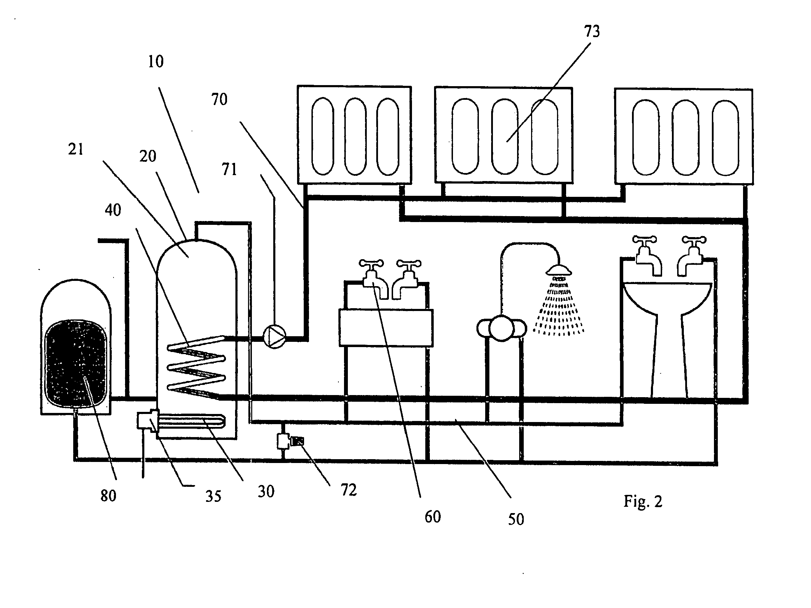

Figure 2 is a schematic diagram of a heating system according to an alternate embodiment of the present invention.

In this embodiment, the heating system 10 is used with a pressurised water supply system, an example of such a system is described in Patent No. GB2349908.

In this embodiment, an accumulator having an internal diaphragm 80 is used. Incoming cold water is stored within the diaphragm 80 at mains pressure. The air space between the diaphragm and accumulator housing is pressurised to balance the supply and maintain pressure to the tank 20 and cold water outlets. When both hot and cold water outlets are turned on, stored water from the accumulator supplements incoming water from the main resulting in consistent water pressure for as long as there is water in the diaphragm 80.

It will be appreciated that the present invention could also be used in pressurised systems without an accumulator.

Figure 3 is a schematic diagram of an electrical heater suitable for use in a preferred embodiment of the present invention.

The electrical heater 30 includes a number of electrical heating elements 31. The elements are arranged into circuits 32, each circuit having a separate power source 33 so that the heater 30 will continue to function should one or more circuits 32 fail. Preferably, three circuits 32 are installed, although any number could be used depending on the desired implementation and application. Each circuit 32 could include one or more element(s) 31.

Optionally, each circuit may include a separate controller 35.

Close control of the electrical heating elements 31 is achieved by one or more controllers 35, which may, for example, be programmed to provide scheduled heating and make use of facilities such as economy tariff energy. The one or more controller(s) 35 may be coupled to the pumps 71 and/or valves 72 to control the central heating circuit 70.

The benefit of multiple elements is that the system will still work if one or two go down, albeit at reduced capacity. For this reason, higher capacity potential could be implemented in the multiple elements (say 3.5Kw each) to take up the surplus in situations where all elements are not operational.

Preferably, the system includes a master controller (such as a 7 day programmer). The master controller is connected to a system controller that is arranged to control operation of the circuits. Additionally, the system controller may be linked to a display for providing status information e.g. 'Call engineer'.

The system controller preferably controls the circuits such that they are never turned on simultaneously to reduce starting load on the system. For example, the first is turned on, then after a preset temp rise (e.g. 3 °C) the second is turned on, then another 3 °C and the third is turned on. This could apply 'from cold' or when the system is ticking over. It's likely that only one element would be used in any case to keep the system ticking over, especially if no water has been drawn. It will be appreciated that other control arrangements could easily be implemented.

Preferably, the system controller alternates the order in which the elements are turned on. Monday it might be 1,2 3; Tuesday might be 3,1,2 etc. This prolongs the life of the elements by sharing the starting load, especially from cold.

During operation, if a circuit fails the system controller determines if the system is already operating at full capacity and If not already at full capacity, the system controller switches in a second or third circuit to compensate for that lost.

Individual circuits or elements may be controlled (for example via a PID controller or the like). Alternatively, further control could be added via a controller with greater functionality (such as a PID controller) whereby the power supplied to individual elements could be controlled such that proportions of that element's possible output could be switched in as required. In this way, low level heating could be supplied demand applications or better temperature control achieved.

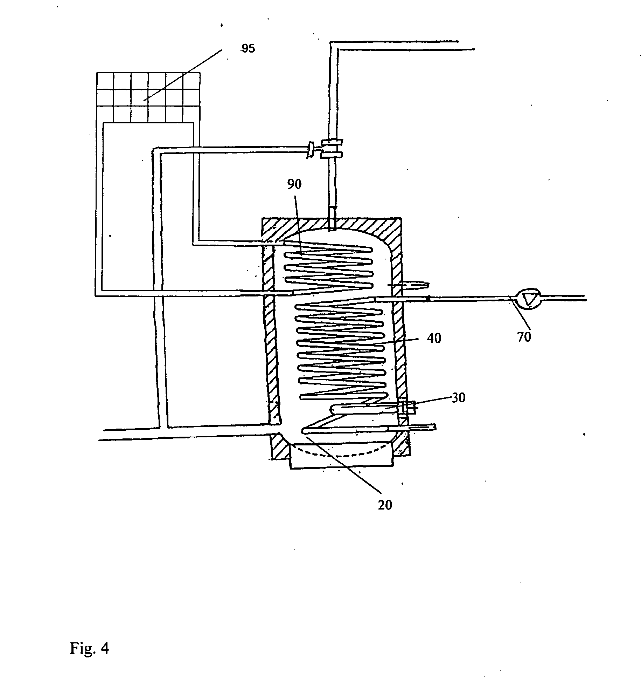

Figure 4 is a schematic diagram of a heating system according to another embodiment of the present invention.

In addition to the heater 30, a secondary heat source 90 is used. Heat is sourced from a Photovoltaic panel or solar heat exchanger 95 to supplement the heat energy supplied by the immersion heater 30. Alternatively, the secondary heat source 90 may be relied upon as the primary source for heating the hot water tank 20 and augmented by the heater 30 as is needed.

Other types of secondary heat sources could also be included. Indeed, multiple secondary heat sources of the same or different types could be used.

## Claims

1. A heating system (10) including a water storage tank (20), a heat exchanger (40) and a plurality of electrical heating elements (31), the heat exchanger (40) and electrical heating elements (31) being mounted substantially within the water storage tank (20), the electrical heating elements (31) being controllable to heat water within the water storage tank (20) and the heat exchanger (40) being arranged to be coupled to a central heating circuit (70) for transferring heat from the water in the storage tank (20) to heat the central heating circuit (70), **characterised in that** the electrical heating elements (31) are arranged into a plurality of circuits (32), each circuit (32) being independently powered and controllable to selectively heat water within the water storage tank (20), the heating system (10) further comprising a system controller (35) arranged to start the circuits (31) sequentially upon receiving a request for heating the water in the water storage tank (20), the system controller (35) being arranged to vary the sequence for each of a plurality of predetermined time periods such that the order in which the circuits (31) are started differs between successive ones of said predetermined time periods.

2. A heating system according to claim 1, wherein said time period comprises a day.

3. A heating system according to claim 2, further comprising monitoring means to monitor the temperature of the water in the storage tank, wherein the system controller (35) is arranged to start the next circuit in the progression of the sequence after a rise in temperature of a predetermined amount is measured by the monitoring means.

4. A heating system according to any preceding claim, further comprising a secondary heat source (90) arranged to provide auxiliary heat to the water within the water storage tank.

5. A heating system according to claim 4, wherein the secondary heat source (90) includes at least one of:
a photovoltaic panel; a solar heat exchanger; a waste heat recovery system; or a geothermal heating system.

6. A heating system according to claim 4 or 5, wherein the heating system is arranged to supplement heat from the secondary heat source (90) with heat from the heating elements in dependence on the predetermined heating program.

7. A heating system according to any preceding claim, further comprising means for monitoring operation of the circuits and to start an inactive circuit and/or adjust operation of an operational circuits upon detection of a failed or failing circuit.

8. A heating system according to any preceding claim, further comprising a pressurised water supply system (80) arranged to supply water to the water storage tank substantially at a predetermined pressure.

9. A heating system according to any preceding claim, wherein one or more of the heating elements (31) comprises an element having a first configuration and a second configuration and being actuable for transition from the first configuration to the second configuration, the first configuration having dimensions for insertion into a corresponding aperture in the water storage tank, the heating element in the second configuration having a greater heater element surface area than in the first configuration.

## Patentansprüche

1. Heizsystem (10), das einen Wasserspeicherbehälter (20), einen Wärmetauscher (40) und eine Mehrzahl von elektrischen Heizelementen (31) enthält, wobei der Wärmetauscher (40) und die elektrischen Heizelemente (31) praktisch innerhalb Wasserspeicherbehälters (20) angebracht sind, wobei die elektrischen Heizelemente (31) steuerbar sind, um Wasser in dem Speicherbehälter (20) aufzuheizen, und der Wärmetauscher (40) so angeordnet ist, dass er mit einem Zentralheizungskreis (70) gekoppelt ist, um Wärme aus dem Wasser in den Speicherbehälter (20) zur Aufheizung des Zentralheizungskreises (70) zu übertragen,
**dadurch kennzeichnet,**
**dass** die elektrischen Heizelemente (31) in einer Mehrzahl von Kreisen (32) angeordnet sind,
**dass** jeder Kreis (32) unabhängig mit Energie versorgt und steuerbar ist, um wahlweise Wasser in dem Wasserspeicherbehälter (20) aufzuheizen, dass das Heizsystem (10) ferner eine Systemsteuereinheit (35) zum Starten der Kreise (31) sequentiell bei Empfang einer Anforderung zum Aufheizen des Wassers in dem Wasserspeicherbehälter (20) umfasst,
**dass** die Systemsteuereinheit (35) so ausgelegt ist, dass die Reihenfolge für jede von einer Mehrzahl von vorbestimmten Zeitperioden so geändert wird, dass die Reihenfolge, in der die Kreise (31) gestartet werden, zwischen aufeinander folgenden vorbestimmten Zeitperioden unterscheidet.

2. Heizsystem nach Anspruch 1,
bei dem die Zeitperiode einen Tag umfasst.

3. Heizsystem nach Anspruch 2,
das ferner Überwachungsmittel umfasst, um die Temperatur des Wassers in dem Speicherbehälter zu überwachen, wobei die Systemsteuereinheit (35) so ausgelegt ist, dass der nächste Kreis in dem Fortschreiten der Reihenfolge startet, nachdem ein Anstieg der Temperatur um einen vorbestimmten Betrag von den Überwachungsmitteln gemessen wird.

4. Heizsystem nach einem der vorhergehenden Ansprüche,
das ferner eine sekundäre Wärmequelle (90) umfasst, um an das Wasser in dem Wasserspeicherbehälter eine Zusatzwärme zu liefern.

5. Heizsystem nach Anspruch 4,
bei dem die sekundäre Wärmequelle (90) wenigstens eines der folgenden Elemente enthält:
eine Photovoltaiktafel; einen Solar-Wärmetauscher; ein Verlustwärme-Wiedergewinnungssystem; oder ein geothermisches Heizsystem.

6. Heizsystem nach Anspruch 4 oder 5,
das so ausgelegt ist, dass es Wärme aus der sekundären Wärmequelle (90) mit Wärme aus den Heizelementen in Abhängigkeit von dem vorbestimmten Heizprogramm ergänzt.

7. Heizsystem nach einem der vorgehenden Ansprüche,
das ferner Mittel zur Überwachung des Betriebs der Kreise und zum Start eines inaktiven Kreises und/oder zum Einstellen des Betriebs eines arbeitenden Kreises bei Feststellung eines versagten oder versagenden Kreises umfasst.

8. Heizsystem nach einem der vorhergehenden Ansprüche,
das ferner ein unter innerem Überdruck stehendes Wasserversorgungssystem (80) zum Zuführen von Wasser zu dem Wasserspeicherbehälter mit einem weitgehend vorbestimmten Druck umfasst.

9. Heizsystem nach einem der vorhergehenden Ansprüche,
bei dem eines oder mehrere der Heizelemente (31) ein Element umfassen, das eine erste Konfiguration und eine zweite Konfiguration hat und zum Übergang aus der ersten Konfiguration in die zweite Konfiguration betätigbar ist, wobei die erste Konfiguration Abmessungen zum Einfügen in eine entsprechende Öffnung in dem Wasserspeicherbehälter hat, wobei das Heizelement in der zweiten Konfiguration einen größeren Heizelement-Oberflächenbereich hat als in der ersten Konfiguration.

## Revendications

1. Système de chauffage (10) comprenant un réservoir (20) de stockage d'eau, un échangeur (40) de chaleur et une pluralité d'éléments (31) de chauffage électrique, l'échangeur (40) de chaleur et les éléments (31) électriques étant montés substantiellement dans le réservoir (20) de stockage d'eau, les éléments (31) de chauffage électrique étant contrôlables pour chauffer l'eau dans le réservoir (20) de stockage d'eau et l'échangeur (40) de chaleur étant disposé pour être couplé à un circuit (70) de chauffage central pour transférer la chaleur de l'eau du réservoir (20) de stockage afin de chauffer le circuit (70) de chauffage central, **caractérisé en ce que** les éléments (31) de chauffage électrique sont disposés dans un pluralité de circuits (32), chaque circuit (32) étant indépendamment alimenté et contrôlé pour chauffer l'eau sélectivement dans le réservoir (20) de stockage, le système (10) de chauffage comprenant de plus un contrôleur (35) de système conçu pour démarrer les circuits (31) séquentiellement sur réception d'une demande de chauffage de l'eau dans le réservoir (20) de stockage d'eau, le contrôleur (35) de système étant conçu pour faire varier la séquence pour chacune de la pluralité de périodes de temps prédéterminées de façon que l'ordre dans lequel les circuits (31) sont démarrés, diffère d'une desdites périodes de temps prédéterminées successives.

2. Système de chauffage selon la revendication 1, dans lequel ladite période de temps est d'une journée.

3. Système de chauffage selon la revendication 2, comprenant de plus des moyens de contrôle pour surveiller la température de l'eau dans le réservoir de stockage, dans lequel le contrôleur (35) de système est conçu pour démarrer le circuit suivant lors du déroulement de la séquence après une élévation de température d'une valeur prédéterminée qui est mesurée par les moyens de contrôle.

4. Système de chauffage selon l'une quelconque des revendications précédentes, comprenant de plus une source (90) secondaire de chaleur conçue pour fournir auxiliairement de la chaleur à l'eau dans le réservoir de stockage d'eau.

5. Système de chauffage selon la revendication 4, dans lequel la source (90) secondaire de chaleur inclut au moins:
- Un panneau photovoltaïque, un panneau solaire; un système de récupération de chaleur ou un système de chaleur géothermique.

6. Système de chauffage selon l'une des revendications 4 ou 5 dans lequel le système de chauffage est conçu pour compléter la chaleur de la source (90) secondaire de chaleur avec la chaleur provenant des éléments de chauffage en fonction du programme de chauffage prédéterminé.

7. Système de chauffage selon l'une quelconque des revendications précédentes pour contrôler le fonctionnement des circuits et pour démarrer un circuit inactif et/ou ajuster le fonctionnement d'un circuit opérationnel sur détection d'un circuit défectueux ou devenant défectueux.

8. Système de chauffage selon l'une quelconque des revendications précédentes, comprenant de plus un système (80) d'alimentation en eau sous pression conçu pour alimenter en eau le réservoir de stockage d'eau substantiellement à une pression déterminée.

9. Système de chauffage selon l'une quelconques des revendications précédentes, dans lequel un ou plus des éléments (31) de chauffage comprend un élément ayant une première configuration et une seconde configuration et étant actionnable pour passer d'une première configuration à une seconde configuration, la première configuration ayant des dimensions pour permettre une insertion dans une ouverture correspondante dans le réservoir de stockage d'eau, l'élément de de chauffage dans la seconde configuration ayant une zone de surface de l'élément de chauffage plus grande que celle dans la première conf iguration.
